(19) Europäisches Patentamt
European Patent Office
Office européen des brevets

(11) **EP 4 501 427 A1**

(12) **EUROPEAN PATENT APPLICATION**
published in accordance with Art. 153(4) EPC

(43) Date of publication:
**05.02.2025 Bulletin 2025/06**

(21) Application number: 23780637.7

(22) Date of filing: **28.03.2023**

(51) International Patent Classification (IPC):
**B01D 15/00** (2006.01)     **B01J 20/22** (2006.01)
**B01J 20/26** (2006.01)     **B01J 20/30** (2006.01)
**A23L 5/20** (2016.01)     **C02F 1/28** (2023.01)

(52) Cooperative Patent Classification (CPC):
**A23L 5/20; B01D 15/00; B01J 20/22; B01J 20/26;
B01J 20/30; C02F 1/28**

(86) International application number:
**PCT/JP2023/012713**

(87) International publication number:
**WO 2023/190628 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2022 JP 2022054158**

(71) Applicants:
• **NAGASE CHEMTEX CORPORATION**
**Osaka-shi, Osaka 550-8668 (JP)**

• **DPS Inc.**
**Kyoto-shi, Kyoto 615-8245 (JP)**

(72) Inventors:
• **UEBAYASHI Yutaro**
**Tatsuno-shi Hyogo 679-4124 (JP)**
• **NAKAMURA Daisuke**
**Tatsuno-shi Hyogo 679-4124 (JP)**
• **Bai Hongzhi**
**Kyoto-shi Kyoto 615-8245 (JP)**

(74) Representative: **Kraus & Lederer PartGmbB**
**Thomas-Wimmer-Ring 15**
**80539 München (DE)**

(54) **ENDOTOXIN ADSORBENT**

(57)     An endotoxin adsorbent comprising a silica monolith having a nitrogen atom-containing cationic group has a sufficient ET adsorption capacity in practice. The silica monolith may have through-holes interconnected therein, and the ends of the through-holes are open to the outside of the silica monolith. The nitrogen atom-containing cationic group is bonded to the silica monolith through or without a spacer or a crosslinking agent.

EP 4 501 427 A1

**Description**

Technical Field

The present invention relates to an endotoxin adsorbent and a method of producing a material from which endotoxin has been removed by using thereof.

Background Art

Endotoxin (ET) (hereinafter also called "ET") is a toxic substance and specifically refers to lipopolysaccharide (LPS) that is a component of an outer membrane of gram-negative bacteria. ET is composed of a polysaccharide and lipid A, and the lipid A is mainly responsible for its toxicity. ET causes fever or shock reaction when taken into a living body due to ET contamination of an injectable solution or the like. Hence, the Japanese Pharmacopoeia defines the ET concentration in injectable solutions as being 10 to 100 pg/ml (0.1 to 1.0 endotoxin unit (EU)/ml). In recent years, for example, isolation and purification of DNA from recombinant Escherichia coli or the like has been studies for use as a DNA vaccine. The DNA thus obtained, however, contains residual ET derived from bacterial cells. In order to administer the thus-obtained DNA as a DNA vaccine to a living body, the residual ET needs to be removed. There is accordingly a strong desire to develop a method for removing ET from pharmaceutical products. In addition, foods should not contain ET, and there is another desire to remove ET from processed food materials.

A well-known exemplary method for removing ET uses various ET adsorbents. For example, Patent Literature 1 discloses an ET adsorbent comprising a cellulose nanofiber having a nitrogen atom-containing cationic group. ET as a lipopolysaccharide has an anionic heterosaccharide such as N-acetylgalactosamine and N-acetylglucosamine or a hydrogen phosphate ion as an anion. Hence, use of an ET adsorbent having a cationic group for removal of ET from a material containing a substance having a cationic group generally causes competitive ET adsorption between the ET adsorbent and the substance having a cationic group, resulting in insufficient ET removal. Nevertheless, the ET adsorbent of Patent Literature 1 can sufficiently remove ET from the material containing a substance having a cationic group.

Patent Literature 2 discloses an ET adsorbent comprising an inorganic material.

Patent Literature 2 teaches that an ET adsorbent comprising a silica gel having an amino group and a hydrophobic group can interact with a phosphate group of ET to selectively adsorb the ET. The ET adsorbent in Patent Literature 2, however, has an insufficient ET adsorption capacity in practice.

Citation List

Patent Literature

**[0006]**

　　Patent Literature 1: WO2017/018524 A1
　　Patent Literature 2: JP1992-256434 A

Summary of Invention

Technical Problem

The present invention has a main objective to provide an ET adsorbent comprising an inorganic material as a base material and having a sufficient ET adsorption capacity in practice.

Solution to Problem

The inventors of the present invention have carried out intensive studies in order to attain the above objective and have found that a silica monolith having a nitrogen atom-containing cationic group can very efficiently remove ET.

The present invention has been completed on the basis of the above findings and provides the following aspects [1] to [8].

　　[1] An endotoxin adsorbent comprising a silica monolith having a nitrogen atom-containing cationic group.
　　[2] The endotoxin adsorbent according to [1], wherein the silica monolith has through-holes interconnected therein, and the ends of the through-holes are open to the outside of the silica monolith.
　　[3] The endotoxin adsorbent according to [1] or [2], wherein the nitrogen atom-containing cationic group is bonded to the silica monolith through or without a spacer or a crosslinking agent.

[4] A method of producing an endotoxin adsorbent, the method comprising a step of introducing a nitrogen atom-containing cationic group to a silica monolith.

[5] A method of producing a material from which endotoxin has been removed, the method comprising a step of bringing the endotoxin adsorbent according to any one of [1] to [3] into contact with a material containing endotoxin to be removed.

[6] A method of producing a material from which endotoxin has been removed, the material containing a target substance, the method comprising a step of bringing the endotoxin adsorbent according to any one of [1] to [3] into contact with a material containing a target substance and containing endotoxin to be removed.

[7] Use of a silica monolith having a nitrogen atom-containing cationic group as an endotoxin adsorbent.

[8] Use of a silica monolith having a nitrogen atom-containing cationic group for the production of an endotoxin adsorbent.

Advantageous Effects of Invention

The ET adsorbent of the present invention has an extremely high ET adsorption capacity as compared to conventional ET adsorbents.

As described above, to use an adsorbent for removing ET from medical materials or food materials, the adsorbent is required to be subjected to high temperature sterilization, high temperature and high pressure sterilization, or radiation sterilization. In the ET adsorbent of the present invention, the base material silica is an inorganic material and thus is unlikely to be degenerated even by high temperature sterilization, high temperature and high pressure sterilization, or radiation sterilization. Hence, the ET adsorbent can be suitably used to remove ET from medical materials or food materials.

The ET adsorbent of the present invention comprises a highly hydrophilic silica monolith as a base material, thus is compatible with an aqueous composition, and consequently can efficiently remove ET from an aqueous material containing ET to be removed. Typically, with an ET adsorbent comprising a hydrophilic substance as a base material, the base material strongly interacts with water molecules. Hence, when used in a batch system, the adsorbent has poor filterability, and when used in a column system, the adsorbent needs high pressure for allowing a liquid to pass.

In contrast, the ET adsorbent of the present invention comprises a hydrophilic base material, but after mixture with an aqueous material containing ET to be removed, the adsorbent is readily separated from the aqueous material. Hence, after contact in a batch system with a material containing ET to be removed, the material from which the ET has been removed can be immediately separated by filtration. When the ET adsorbent of the present invention is packed in a column through which a material containing ET to be removed is allowed to pass, the material can speedily pass without high pressure. Many pharmaceutical materials and food materials are highly viscous materials such as polysaccharides, but use of the ET adsorbent of the present invention enables the rapid removal of ET from such a highly viscous material.

Silica, which is hardly absorbed into a living body, has been generally used as a diluent for pharmaceutical products, an adsorbent for food or pharmaceutical products, a filter, an abrasive for toothpastes, and the like, and the safety thereof has been established. Accordingly, the ET adsorbent of the present invention is highly safe and thus can be suitably used to remove ET from medical materials or food materials.

Brief Description of Drawings

Fig. 1 is a graph showing the pressure loss when 8% aqueous pullulan solution was passed through a column packed with N,N-dimethyldecylamine-immobilized porous silica monolith particles (DDA-PSM) prepared in Example 1.

Fig. 2 is a graph showing the pressure loss when 8% aqueous pullulan solution was passed through a column packed with ethylenediamine-immobilized cellulose nanofibers (EDA-CNF) prepared in Comparative Example 2.

Description of Embodiments

The present invention will now be described in detail.

(1) Endotoxin adsorbent

The endotoxin adsorbent (ET adsorbent) of the present invention is an ET adsorbent comprising a silica monolith having a nitrogen atom-containing cationic group.

Silica monolith

The silica monolith comprises silica and has through-holes interconnected therein, and the ends of the through-holes are open to the outside of the silica monolith. In other words, the silica monolith is a silica having through-holes connected to the outside and connected to each other therein. The silica monolith is also called an interconnected porous silica. The framework of a three-dimensional network structure having through-holes has a large number of pores. The diameter of the through-holes is, for example, on the order of micrometers, and the diameter of the pores is, for example, on the order of nanometers.

The silica gel disclosed in Patent Literature 2 have pores but has no through-holes unlike the silica monolith.

The method of producing a silica monolith is well known, and the silica monolith can be produced by a sol-gel method involving phase separation from an alkoxysilane as a starting material.

For example, a silica precursor containing an alkoxysilane as a main component is mixed with a solvent phase to prepare a sol. The sol is maintained at a temperature not less than a predetermined gelation acceleration temperature to promote sol-gel transition in parallel with phase separation, and this forms a co-continuous structure comprising a silica hydrogel phase which has a three-dimensional continuous network structure and a solvent phase. From the co-continuous structure, the solvent phase is removed, and accordingly a silica monolith is produced. In the sol preparation step in the method, at least one of a compound constituting the solvent phase and a compound of the silica precursor to be added to the reaction system is strongly cooled to prepare a solid refrigerant, and the solid refrigerant is added into the solvent phase. This can suppress an increase in temperature of the sol during the sol preparation step to prepare a homogeneous gel, resulting in the production of a silica monolith having a homogeneous frame structure (JP 2012-96960 A).

A silica monolith in the particulate form, the massive form, the film form, or the like may be used. A commercially available silica monolith may also be used. Commercial products of the silica monolith may be purchased from DPS Inc., SNG Inc., GL Sciences Inc., or the like.

Nitrogen atom-containing cationic group

The silica monolith in the ET adsorbent of the present invention has a nitrogen atom-containing cationic group. Examples of the nitrogen atom-containing cationic group include amino groups (such as primary amino groups, secondary amino groups, and tertiary amino groups), quaternary ammonium groups, an imino group, an amidine group, a guanidino group, an imidazole group, a quaternary imidazolium group, a pyridyl group, and a quaternary pyridinium group. The amino group may be any of a functional group formed by elimination of a hydrogen atom from ammonia ($-NH_2$), a functional group formed by elimination of a hydrogen atom from a primary amine (-NHR), and a functional group formed by elimination of a hydrogen atom from a secondary amine (-NRR').

The nitrogen atom-containing cationic group may be acyclic or may be cyclic.

Method of introducing nitrogen atom-containing cationic group

A nitrogen atom-containing cationic group can be introduced by reacting a silica monolith with a silane coupling agent to introduce an epoxy group and then reacting the epoxy group with a donor of the nitrogen atom-containing cationic group.

When the silane coupling agent itself has a nitrogen atom-containing cationic group, the reaction with a donor of the nitrogen atom-containing cationic group may be further performed or may not be performed. In other words, the ET adsorbent of the present invention includes an ET adsorbent in which a nitrogen atom-containing cationic group is bonded to a silica monolith through a spacer or crosslinking agent such as a silane coupling agent and an ET adsorbent in which a nitrogen atom-containing cationic group is bonded to a silica monolith without a spacer or a crosslinking agent. The nitrogen atom-containing cationic group is a cationic group derived from a donor of the nitrogen atom-containing cationic group or a cationic group derived from a nitrogen atom-containing cationic compound.

Examples of the silane coupling agent include vinyltrimethoxysilane, vinyltriethoxysilane, 2-(3,4-epoxycyclohexyl)ethyltrimethoxysilane, 3-glycidoxypropylmethyldiethoxysilane, 3-glycidoxypropylmethyldimethoxysilane, 3-glycidoxypropyltriethoxysilane, 3-glycidoxypropyltrimethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, [3-(diethylamino)propyl]trimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, N-(vinylbenzyl)-2-aminopropyltrimethoxysilane hydrochloride, tris-(trimethoxysilylpropyl)isocyanurate, 3-ureidopropyltrialkoxysilane, 3-mercaptopropylmethyldimethoxysilane, 3-isocyanatopropyltriethoxysilane, and dithioltriazinepropyltriethoxysilane.

Of them, an alkoxysilane having an epoxy group is preferred, and 3-glycidoxypropyltriethoxysilane and 3-glycidoxypropylmethyldiethoxysilane are more preferred.

One or more silane coupling agents may be used.

Examples of the nitrogen atom-containing cationic compound as a donor of the nitrogen atom-containing cationic group include ammonia, amidines, amines (including a primary amine, a secondary amine, and a tertiary amine), quaternary ammonium salts, quaternary imidazolium salts, and quaternary pyridinium salts. Of them, a primary amine is preferred.

A donor of the nitrogen atom-containing cationic group may have a single nitrogen atom-containing cationic group or may have two or more nitrogen atom-containing cationic groups. For example, when the nitrogen atom-containing cationic compound is an amine, the amine may be a monovalent amine, a divalent amine, or a more polyvalent amine.

The nitrogen atom-containing cationic compound may be a polymer or may not be a polymer.

Examples of the monovalent amine include aliphatic amines specifically including alkylamines (primary amines such as methylamine, ethylamine, propylamine, butylamine, pentylamine, hexylamine, heptylamine, coconut amine, octylamine, nonylamine, decylamine, laurylamine, stearylamine, and oleylamine; secondary amines such as dimethylamine, diethylamine, dipropylamine, dibutylamine, dipentylamine, dihexylamine, diheptylamine, dioctylamine, dinonylamine, and didecylamine; and tertiary amines such as trimethylamine, triethylamine, tripropylamine, tributylamine, diisopropylethylamine, N,N-dimethylethylamine, N,N-dimethylpropylamine, N,N-dimethylbutylamine, N,N-dimethylpentylamine, N,N-dimethylhexylamine, N,N-dimethylheptylamine, N,N-dimethyloctylamine, N,N-dimethylnonylamine, N,N-dimethyl coconut amine, N,N-dimethyldecylamine, N,N-dimethyllaurylamine, N,N-dimethylmyristylamine, N,N-dimethylpalmitylamine, N,N-dimethylstearylamine, dimethylbehenylamine, didecylmonomethylamine, and trioctylamine); aromatic amines (including primary amines such as aniline and toluidine); heterocyclic amines (including secondary amines such as pyrrolidine, piperidine, morpholine, and imidazole; and tertiary amines such as pyridine, 2,4,6-trimethylpyridine (collidine), 2,6-lutidine, quinoline, N-methylmorpholine, and N-ethylmorpholine); and alkanolamines or aminoalcohols (primary amines such as monomethanolamine, monoethanolamine, monoisopropanolamine, 2-amino-2-methyl-1-propanol, 2-amino-2-methyl-1,3-propanediol, 3-amino-1,2-propanediol, 3-dimethylamino-1,2-propanediol, and tris(hydroxymethylamino)methane; secondary amines such as diethanolamine, diisopropanolamine, N-methylethanolamine, and N-ethylethanolamine; and tertiary amines such as triethanolamine, triisopropanolamine, N-dimethylaminoethanol, and N-diethylaminoethanol).

Examples of the polyvalent amine include aliphatic diamines such as ethylenediamine, tetramethylethylenediamine, tetramethylenediamine, and hexamethylenediamine; alicyclic diamines such as 4,4'-diamino-3,3'-dimethyldicyclohexylmethane, N,N,N',N'-tetramethyl-1,6-diaminohexane, diamine cyclohexane, and isophoronediamine; aromatic diamines such as phenylenediamine, diaminonaphthalene, and xylylenediamine; heterocyclic diamines such as piperazine; trivalent or higher valent aliphatic amines such as diethylenetriamine, triethylenetetramine, tetraethylenepentamine, pentaethylenehexamine, hexaethylenepentamine, tris(2-aminoethyl)amine, tris(3-aminopropyl)amine, and guanidine; and trivalent or higher valent aromatic amines such as melamine.

Examples of the polyvalent amine also include polyethyleneimine, polyvinylamine, polyallylamine, methoxy poly(oxyethylene/oxypropylene)-2-propylamine, polyoxypropylenediamine, polyetheramine, triethylene glycol diamine, trimethylolpropane poly(oxypropylene) triamine, glyceryl poly(oxypropylene) triamine, amino acids (specifically basic amino acids such as lysine, arginine, histidine, ornithine, and tryptophan), amino acid polymers (specifically basic amino acid polymers such as polylysine, polyarginine, polyhistidine, polyornithine, and polytryptophan), and polymers having an amino group such as polycreatinine. The polymer may be linear or branched. The polymer may have a number average molecular weight of, for example, 50 or more, 100 or more, or 150 or more and 1,000,000 or less, 100,000 or less, 10,000 or less, 5,000 or less, 2,000 or less, or 1,000 or less. The polymer has a number average molecular weight of, for example, 50 to 1,000,000, 50 to 100,000, 50 to 10,000, 50 to 5,000, 50 to 2,000, 50 to 1,000, 100 to 1,000,000, 100 to 100,000, 100 to 10,000, 100 to 5,000, 100 to 2,000, 100 to 1,000, 150 to 1,000,000, 150 to 100,000, 150 to 10,000, 150 to 5,000, 150 to 2,000, or 150 to 1,000.

Examples of the quaternary ammonium salt include glycidyltrimethylammonium salts (such as a hydrochloride and a hydrobromide). For example, a quaternary amine quaternized by alkylation of the above-exemplified tertiary amine may also be used.

Examples of the quaternary imidazolium salt include 1-decyl-3-methylimidazolium salts, 1-methyl-3-octylimidazolium salts, and 1-methyl-benzoimidazolium salts (such as a hydrochloride and a hydrobromide).

Examples of the quaternary pyridinium salt include butylpyridinium salts and dodecylpyridinium salts (such as a hydrochloride and a hydrobromide).

As the nitrogen atom-containing cationic compound, monovalent amines and polyvalent amines are preferred. Of them, octylamine, laurylamine, N,N-dimethyloctylamine, N,N-dimethyldecylamine, N,N-dimethyllaurylamine, N,N-dimethylmyristylamine, N,N-dimethylpalmitylamine, N,N-dimethylstearylamine, didecylmonomethylamine, N,N-dimethyloctylamine, polyallylamine, and polylysine are specifically preferred.

One or more nitrogen atom-containing cationic compounds may be used.

When two or more cationic compounds are used, a mixture of silica monoliths to which the corresponding cationic compounds have been introduced may be used, or a silica monolith to which two or more cationic compounds have been introduced may be used.

After introduction of a nitrogen atom-containing cationic compound to a silica monolith, the product may be further modified to increase the cationic properties.

For example, an amino group may be quaternized to increase the cationic properties. Examples of the compound for quaternizing an amino group include epoxy group donors such as chloromethyloxirane (epichlorohydrin), glycidyl methacrylate, glycidyl acrylate, diglycidyl ether, epibromohydrin, and ethylene glycol diglycidyl ether, p-toluenesulfonyl chloride, 2-fluoro-1-methylpyridinium, chloroacetyl chloride, hexamethylene diisocyanate, m-xylene diisocyanate, toluene-2,4-diisocyanate, iodomethane, and iodoethane.

By additionally introducing a nitrogen atom-containing cationic group, the cationic properties may also be increased. Examples of the method of additionally introducing a nitrogen atom-containing cationic group include a method by activation of an introduced cationic group with an activating agent (such as a compound for quaternizing an amino group) and subsequent reaction with a nitrogen atom-containing cationic compound having a cationic group that is identical to or different from the previously introduced cationic group. As the nitrogen atom-containing cationic compound, the above-exemplified compounds may be used.

One or more compounds to be reacted for increasing the cationic properties may be used.

The reaction conditions between a silica monolith and a silane coupling agent may be appropriately set by a person skilled in the art according to the silane coupling agent to be used. If needed, an appropriate catalyst and an appropriate solvent may be used, and an appropriate temperature and an appropriate time may be set.

A silica monolith to which an epoxy group has been introduced may be reacted with a donor of the nitrogen atom-containing cationic group, for example, at about 10 to 100°C for about 1 to 48 hours. The solvent used may typically be water. An alcohol such as methanol, ethanol, 2-propanol, and ethylene glycol monomethyl ether (2-methoxyethanol) or an aprotic polar solvent such as dimethylformamide and dimethyl sulfoxide may also be used. One or more solvents may be used.

Properties of silica monolith having nitrogen atom-containing cationic group

In the silica monolith having a nitrogen atom-containing cationic group, the content of the nitrogen atom-containing cationic group is preferably, for example, 0.01 mEq/dry·g or more, specifically 0.1 mEq/dry·g or more, specifically 0.5 mEq/dry·g or more, and specifically 1 mEq/dry·g or more, in terms of anion exchange capacity (AEC). The content may be, for example, 10 mEq/dry·g or less, 5 mEq/dry·g or less, or 3 mEq/dry·g or less. Within such a range, ET can be sufficiently adsorbed and removed.

As the index of the content of the nitrogen atom-containing cationic group, the AEC is, for example, 0.01 to 10 mEq/dry·g, 0.01 to 5 mEq/dry·g, 0.01 to 3 mEq/dry·g, 0.1 to 10 mEq/dry·g, 0.1 to 5 mEq/dry·g, 0.1 to 3 mEq/dry·g, 0.5 to 10 mEq/dry·g, 0.5 to 5 mEq/dry·g, 0.5 to 3 mEq/dry·g, 1 to 10 mEq/dry·g, 1 to 5 mEq/dry·g, or 1 to 3 mEq/dry.g.

The silica monolith having a nitrogen atom-containing cationic group may have a cationic group (anion exchange group) other than the nitrogen atom-containing cationic group as long as the advantageous effects of the invention are not impaired. The content of the cationic group other than the nitrogen atom-containing cationic group may be, for example, 3 mEq/dry·g or less in terms of anion exchange capacity (AEC). The cationic group other than the nitrogen atom-containing cationic group may not be contained.

If the silica monolith having a nitrogen atom-containing cationic group comprises an anionic group, a cation is non-specifically adsorbed to the anionic group. Hence, the silica monolith having a nitrogen atom-containing cationic group preferably comprises no anionic group. If an anionic group is contained, the content thereof may be, for example, 1 mEq/dry·g or less in terms of cation exchange capacity (CEC).

In the present invention, the ion exchange capacity is determined by a pH titration method and is specifically determined in accordance with the method in Examples.

In the silica monolith having a nitrogen atom-containing cationic group, the through-holes may have an average diameter of 0.1 μm or more, specifically 1 μm or more, and specifically 10 μm or more. Within such a range, a material containing ET to be removed easily enters the through-holes, and the ET can be efficiently adsorbed. The average diameter may be 50 μm or less, specifically 20 μm or less, specifically 10 μm or less, and specifically 1 μm or less. Within such a range, the silica monolith has a sufficiently large specific surface area and can efficiently adsorb ET.

In the silica monolith having a nitrogen atom-containing cationic group, the through-holes have an average diameter of, for example, 0.1 to 50 μm, 0.1 to 20 μm, 0.1 to 10 μm, 0.1 to 1 μm, 1 to 50 μm, 1 to 20 μm, 1 to 10 μm, 10 to 50 μm, or 10 to 20 μm.

The average diameter of through-holes is determined by using a scanning electron microscope (SEM).

In the silica monolith having a nitrogen atom-containing cationic group, the pores may have an average diameter of 1 nm or more, specifically 5 nm or more, and specifically 8 nm or more. Within such a range, a material containing ET to be removed easily enters the pores, and the ET can be efficiently adsorbed. The average diameter may be 200 nm or less, specifically 100 nm or less, and specifically 10 nm or less. Within such a range, the silica monolith has a sufficiently large specific surface area and can efficiently adsorb ET.

In the silica monolith having a nitrogen atom-containing cationic group, the pores have an average diameter of, for example, 1 nm to 200 nm, 1 nm to 100 nm, 1 nm to 10 nm, 5 nm to 200 nm, 5 nm to 100 nm, 5 nm to 10 nm, 8 nm to 200 nm, 8 nm to 100 nm, or 8 nm to 10 nm.

The average diameter of pores is determined by the Barrett-Joyner-Halenda (BJH) method.

The silica monolith having a nitrogen atom-containing cationic group may have a specific surface area of 0.1 $m^2$/g or more, specifically 1 $m^2$/g or more, specifically 10 $m^2$/g or more, and specifically 100 $m^2$/g or more. Within such a range, ET can be efficiently adsorbed. The specific surface area may be 1,000 $m^2$/g or less, specifically 700 $m^2$/g or less, and specifically 500 $m^2$/g or less. Within such a range, the silica monolith has sufficient mechanical strength.

The silica monolith having a nitrogen atom-containing cationic group has a specific surface area of, for example, 0.1 to 1,000 $m^2$/g, 0.1 to 700 $m^2$/g, 0.1 to 500 $m^2$/g, 1 to 1,000 $m^2$/g, 1 to 700 $m^2$/g, 1 to 500 $m^2$/g, 10 to 1,000 $m^2$/g, 10 to 700 $m^2$/g, 10 to 500 $m^2$/g, 100 to 1,000 $m^2$/g, 100 to 700 $m^2$/g, or 100 to 500 $m^2$/g.

The specific surface area is determined by the Brunauer-Emmett-Teller (BET) method.

The average diameter of the through-holes or the pores and the specific surface area of the silica monolith remain almost the same even after introduction of a nitrogen atom-containing cationic group.

The ET removal rate per AEC of the ET adsorbent of the present invention may be 30%·dry weight/mEq or more, specifically 50%·dry weight/mEq or more, specifically 70%·dry weight/mEq or more, specifically 100%·dry weight/mEq or more, specifically 110%·dry weight/mEq or more, specifically 120%·dry weight/mEq or more, specifically 150%·dry weight/mEq or more, and specifically 200%·dry weight/mEq or more. The upper limit of the ET removal rate per AEC may be about 500%·dry weight/mEq.

The ET removal rate per AEC is, for example, 30 to 500%·dry weight/mEq, 50 to 500%·dry weight/mEq, 70 to 500%·dry weight/mEq, 100 to 500%·dry weight/mEq, 110 to 500%·dry weight/mEq, 120 to 500%·dry weight/mEq, 150 to 500%·dry weight/mEq, or 200 to 500%·dry weight/mEq.

The ET removal rate is the percentage of a decrease in ET concentration by ET adsorbent treatment relative to the ET concentration of a material containing ET to be absorbed.

ET adsorbent

The silica monolith having a nitrogen atom-containing cationic group can be used independently or in combination with other components, as the ET adsorbent of the present invention.

The ET adsorbent of the present invention can be packed in a column and used. The column packed with the ET adsorbent of the present invention can be used as a column for removing ET.

The ET adsorbent of the present invention can be treated into an ET-free form as needed and used. The ET-free form can be prepared in a usual manner. ET can be removed, for example, by washing the ET adsorbent of the present invention once or multiple times with a cleaning liquid. Examples of the cleaning liquid include water such as water for injection, ethanol solution, an aqueous solution of sodium hydroxide and an ethanol solution of sodium hydroxide. After washing, the ET adsorbent of the present invention can be separated from the cleaning liquid by a solid-liquid separating means such as centrifugation and filtration.

(2) ET removal method

By bringing the ET adsorbent of the present invention into contact with a material containing ET to be removed, the ET in the material containing ET to be removed is adsorbed to the ET adsorbent. Accordingly, a material from which ET has been removed is obtained. Then, the material from which ET has been removed can be separated from the ET adsorbent that has adsorbed ET.

In other words, the ET removal method of the present invention is a method comprising a step of bringing the ET adsorbent of the present invention into contact with a material containing ET to be removed. The method can further comprise a step of separating a material from which ET has been removed from the ET adsorbent that has adsorbed ET, for example, a step of collecting the material from which ET has been removed from a mixture of the ET adsorbent of the present invention and the material containing ET to be removed. In other words, the ET removal method of the present invention is a method of producing a material from which ET has been removed.

The material containing ET to be removed may be a floating or liquid material. The material containing ET to be removed may be a floating or liquid material made by heating or warming. The material containing ET to be removed may comprise a single target component or may comprise two or more target components. The target component is a necessary component contained in the material containing ET to be removed, and should not be removed. The material containing ET to be removed may be a solution or suspension of a single or two or more components in water or another solvent. Even when brought into contact with an aqueous composition, the ET adsorbent of the present invention is easily separated from the aqueous composition after contact. Hence, the material containing ET to be removed is preferably a material containing water.

Examples of the material containing ET to be removed include water for medical use such as distilled water for injection and saline for injection, injection fluids, water for food preparation, and beverage.

The ET adsorbent of the present invention can be suitably used for removal of ET from a highly viscous material. Examples of the material containing ET to be removed include mucopolysaccharides such as chondroitin sulfate, hyaluronic acid, sodium hyaluronate, heparan sulfate, dermatan sulfate, keratan sulfate, and heparin. Mucopolysaccharides are used as a component in pharmaceutical products, cosmetics, and the like.

Examples of the highly viscous material containing ET to be removed include $\beta$-glucans such as laminaran, curdlan, and cellulose; $\alpha$-glucans such as pullulan, amylose, glycogen, amylopectin, and dextran; and an aqueous solution of decomposed collagen. These materials are used as a component in pharmaceutical products, dietary supplements, cosmetics, and the like or as a food additive.

Examples of the highly viscous material containing ET to be removed also include polysaccharides such as alginic acid, sodium alginate, pectin, carrageenan, guar gum, locust bean gum, tamarind gum, and xanthan gum, propylene glycol, and carboxymethyl cellulose. These materials are used as a thickener, a gelling agent, an adhesive paste, or the like for production of pharmaceutical or food products.

A material prepared by decomposition of such a material with an acid, an alkali, or an enzyme may also be used.

Examples of the highly viscous material containing ET to be removed also include monomers used as a material of artificial organs or artificial bones.

A solution or suspension prepared by dissolving or suspending such a material in water or another solvent can also be used as the material containing ET to be removed.

Other examples of the material containing ET to be removed include solutions or suspensions of proteins, peptides, vitamins, and the like.

When brought into contact with the ET adsorbent of the present invention, the material containing ET to be removed can have various pH values depending on the type of a cationic group, the pH stability of the material containing ET to be removed, and the like. For example, the pH can be 1 to 14, particularly 3 or more, 4 or more, 5 or more, or 6 or more and can be 10 or less, 9 or less, or 8 or less. The pH may be 7 or less. When brought into contact with the ET adsorbent of the present invention, the material containing ET to be removed has a pH of, for example, 3 to 10, 3 to 9, 3 to 8, 3 to 7, 4 to 10, 4 to 9, 4 to 8, 4 to 7, 5 to 10, 5 to 9, 5 to 8, 5 to 7, 6 to 10, 6 to 9, 6 to 8, or 6 to 7.

When brought into contact with the ET adsorbent of the present invention, the material containing ET to be removed can have various ionic strengths depending on the type of a cationic group, the ionic strength stability of the material containing ET to be removed, and the like. For example, the ionic strength can be 0.8 or less, 0.6 or less, or 0.4 or less. The ionic strength can be zero or practically zero or can be 0.001 or more, 0.003 or more, or 0.005 or more.

When brought into contact with the ET adsorbent of the present invention, the material containing ET to be removed has an ionic strength of 0 to 0.8, 0 to 0.6, 0 to 0.4, 0.001 to 0.8, 0.001 to 0.6, 0.001 to 0.4, 0.003 to 0.8, 0.003 to 0.6, 0.003 to 0.4, 0.005 to 0.8, 0.005 to 0.6, or 0.005 to 0.4.

The ET adsorbent of the present invention can be brought into contact with the material containing ET to be removed, for example, in a batch system. The "batch system" is a system by mixing the ET adsorbent of the present invention with a material containing ET to be removed in an appropriate container, thereby bringing the ET adsorbent of the present invention into contact with the material containing ET to be removed. In the batch system, a mixture may be allowed to stand or may be stirred or shaken. The contact time varies with the type of a material containing ET to be removed and the like and can be, for example, 5 minutes to 120 hours, 30 minutes to 24 hours, 1 to 12 hours, or 2 to 4 hours. The temperature at the time of contact varies with the type of a material containing ET to be removed and the like and can be, for example, 5 to 80°C, 15 to 65°C, or 25 to 50°C. After adsorption of ET to the ET adsorbent of the present invention, the ET adsorbent of the present invention can be separated from the mixture by filtration, centrifugation, or the like.

The ET adsorbent of the present invention can be brought into contact with a material containing ET to be removed, for example, by a fluidizing separation method. The "fluidizing separation method" is a technique by allowing a material containing ET to be removed to pass through the ET adsorbent of the present invention, thereby bringing the ET adsorbent of the present invention into contact with the material containing ET to be removed. Specifically, for example, by packing the ET adsorbent of the present invention in a column and allowing an ET-containing liquid to pass through the column, the ET adsorbent of the present invention can be brought into contact with the material containing ET to be removed. For example, when the ET adsorbent of the present invention is formed into a filter shape, by allowing a material containing ET to be removed to pass through the filter, the ET adsorbent of the present invention can be brought into contact with the material containing ET to be removed. Examples of the membrane include a membrane filter, a hollow fiber membrane, and a tubular membrane. When the ET adsorbent of the present invention is formed into a pillar shape or the like, by allowing a material containing ET to be removed to pass through the pillar-shaped adsorbent or the like, the ET adsorbent of the present invention can be brought into contact with the material containing ET to be removed. By placing the ET adsorbent of the present invention on a filter paper and allowing a material containing ET to be removed to pass therethrough, the ET adsorbent of the present invention can be brought into contact with the material containing ET to be removed.

By the ET removal method of the present invention, ET in a material containing ET to be removed is removed. The ET can be removed to such a degree that the ET concentration or content in a material containing ET to be removed after the treatment (after contact with the ET adsorbent of the present invention) is lower than that before the treatment (before contact with the ET adsorbent of the present invention).

The "ET being removed" may mean that, for example, the ET concentration or content in the material containing ET to be removed after treatment is reduced, as compared with that before the treatment, to 50% or less, 30% or less, 20% or less, 10% or less, 5% or less, 2% or less, 1% or less, or practically zero% (especially, zero%). That is, ET removal rate may be 50% or more, 70% or more, 80% or more, 90% or more, 95% or more, 98% or more, 99% or more, or practically 100% (especially, 100%).

The "ET being removed" may mean that, for example, the liquid after the treatment has an ET concentration of 100 EU/g or less, 60 EU/g or less, 10 EU/g or less, 5 EU/g or less, 1 EU/g or less, or practically zero EU/g (especially zero EU/g).

When the material containing ET to be removed is a solution or suspension containing a target component that is to be separated from ET, the target component is not removed after treatment. "A target component in a material containing ET to be removed being not removed" may mean that the content of the target component in the material containing ET to be removed after treatment is maintained at 90% or more, 95% or more, 97% or more, 99% or more, or practically 100% (especially 100%) as compared with that before treatment.

Removal of ET is ascertained by quantitative determination of the ET in the material containing ET to be removed after treatment. Examples of the quantitative determination method of ET include a Limulus test using a Limulus reagent. The Limulus test can be performed in a usual manner. The Limulus test can be performed, for example, by a colorimetric method, a turbidimetric method, or a gelation method.

EXAMPLES

The present invention will next be described in more detail with reference to Examples, but the present invention is not limited to them.

(1) Production of cationized silica monolith particles

As cationized porous silica monolith particles, N,N-dimethyldecylamine-immobilized silica monolith particles (DDA-PSM), N,N-dimethyloctylamine-immobilized silica monolith particles (DMOA-PSM), polyallylamine-immobilized silica monolith particles (PAA-PSM), poly-ε-lysine-immobilized silica monolith particles (ε-PLL-PSM), and [3-(diethylamino)propyl]trimethoxysilane-immobilized silica monolith particles (DEAP-PSM) were synthesized by the following procedure.

Example 1

In a separable flask, 4 g of 3-glycidoxypropylmethyldiethoxysilane (trade name "KBE-402"; Shin-Etsu Chemical Co., Ltd.) was placed as a silane coupling agent, and 25 g of 0.05% acetic acid was added. The whole was stirred at room temperature for 1 hour. Next, 5 g of porous silica monolith particles (Dual Pore SIL; DPS Inc.; a pore diameter of 8.2 nm, a through-hole diameter of 1.0 $\mu$m, a specific surface area of 490 m$^2$/g) were added. The whole was further stirred at 45°C for 24 hours. The resulting slurry was subjected to suction filtration through a filter cloth (trade name "TF-301B"; Toray Industries, Inc.) and was rinsed with a large amount of water, giving epoxy group-introduced porous silica monolith particles (hereinafter also called "EP-PSM").

The resulting EP-PSM was dispersed in 60 g of denatured alcohol (trade name "AP-7"; Japan Alcohol Trading Co., Ltd.) and 60 g of water. Next, 32 g of N,N-dimethyldecylamine (trade name "Farmin DM1098"; Kao Corporation) was added, and the whole was stirred in a water bath at 45°C for 24 hours. The reaction product was subjected to suction filtration through a filter cloth and was rinsed with a large amount of denatured alcohol and then with a large amount of water, giving N,N-dimethyldecylamine-immobilized silica monolith particles (hereinafter also called "DDA-PSM").

Example 2

After preparation of EP-PSM in the same manner as in Example 1, 5 g of EP-PSM was placed in a separable flask and was dispersed in 60 g of denatured alcohol (trade name "AP-7"; Japan Alcohol Trading Co., Ltd.) and 60 g of water. Next, 32 g of N,N-dimethyloctylamine (trade name "D1814"; Tokyo Chemical Industry Co., Ltd.) was added, and the whole was stirred in a water bath at 45°C for 24 hours. The reaction product was subjected to suction filtration through a filter cloth and was rinsed with a large amount of denatured alcohol and then with a large amount of water, giving N,N-dimethyloctylamine-immobilized porous silica monolith particles (hereinafter also called "DMOA-PSM").

Example 3

After preparation of EP-PSM in the same manner as in Example 1, 5 g of EP-PSM was placed in a separable flask and was dispersed in 60 g of denatured alcohol (trade name "AP-7"; Japan Alcohol Trading Co., Ltd.) and 60 g of water. Next, 32 g of polyallylamine (trade name "PAA-05"; Nittobo Medical Co., Ltd.) was added, and the whole was stirred in a water bath at 45°C for 24 hours. The reaction product was subjected to suction filtration through a filter cloth and was rinsed with a large amount of denatured alcohol and then with a large amount of water, giving polyallylamine-immobilized porous silica monolith particles (hereinafter also called "PAA-PSM").

Example 4

After preparation of EP-PSM in the same manner as in Example 1, 5 g of EP-PSM was placed in a separable flask and was dispersed in 60 g of denatured alcohol (trade name "AP-7"; Japan Alcohol Trading Co., Ltd.) and 60 g of water. Next, 32 g of poly-$\varepsilon$-lysine (trade name "POLYLYSINE"; JNC Corporation) was added, and the whole was stirred in a water bath at 45°C for 24 hours. The reaction product was subjected to suction filtration through a filter cloth and was rinsed with a large amount of denatured alcohol and then with a large amount of water, giving $\varepsilon$-polylysine-immobilized porous silica monolith particles (hereinafter also called "$\varepsilon$-PLL-PSM") .

Example 5

In a separable flask, 1.4 g of [3-(diethylamino)propyl]trimethoxysilane (trade name "D4362"; Tokyo Chemical Industry Co., Ltd.) as a silane coupling agent and 100 g of tetrahydrofuran as a solvent were placed. Next, 5 g of porous silica monolith particles (Dual Pore SIL; DPS Inc.) were added. The whole was stirred at room temperature for 24 hours. The resulting slurry was subjected to suction filtration through a filter cloth (trade name "TF-301B"; Toray Industries, Inc.) and was rinsed with a large amount of denatured alcohol and then with a large amount of water, giving [3-(diethylamino) propyl]trimethoxysilane-immobilized porous silica monolith particles (hereinafter also called "DEAP-PSM") .
The cationized silica monolith particles produced in Examples 1 to 5 were observed under a scanning electron microscope. The observation revealed that the particles were almost spherical and the ends of pores were open on the surface.

(2) Production of cationized silica gel/cationized cellulose nanofibers

Comparative Example 1

The same procedure as in Example 5 was performed except that silica gel (SMB100-20/45; Fuji Silysia Chemical Ltd.; a pore diameter of 10 nm, a specific surface area of 312 $m^2$/g) was used in place of the porous silica monolith particles (Dual Pore SIL; DPS Inc.; a pore diameter of 8.2 nm, a through-hole diameter of 1.0 $\mu$m, a specific surface area of 490 $m^2$/g), giving [3-(diethylamino)propyl]trimethoxysilane-immobilized porous silica gel particles (hereinafter also called "DEAP-PS").

Comparative Example 2

In a 500-mL separable flask, 20 wet-g of wet cellulose nanofibers (Celish KY-100S; Lot. 64011; manufactured by Daicel FineChem Ltd.) and 10% (w/w) aqueous sodium hydroxide solution (10 g of sodium hydroxide (guaranteed reagent; manufactured by Nacalai Tesque, Inc.) was dissolved in 90 mL of water) were placed, and the whole was stirred in a water bath at 30°C for 1 hour. Next, to the separable flask, 160 mL of chloromethyloxirane (guaranteed reagent; manufactured by Wako Pure Chemical Industries, Ltd.) was added, and the whole was further stirred in a water bath at 30°C for 2 hours. The stirring speed was constant. The reaction product was subjected to suction filtration through a filter cloth (Toray Silk, a mesh size of 20 $\mu$m, manufactured by Toray Industries, Inc.) to give epoxy-activated cellulose nanofibers as a solid content (filtration residue). The resulting epoxy-activated cellulose nanofibers and a mixed liquid of 0.55 g of ethylenediamine (trade name "E0077"; Tokyo Chemical Industry Co., Ltd.), 35 mL of water, and 35 mL of denatured alcohol (trade name "AP-7"; Japan Alcohol Trading Co., Ltd.) were placed in a separable flask, and the whole was stirred in a water bath at 45°C for 4 hours. The reaction product was thoroughly washed on a Toray Silk with ultrapure water until the pH of the washing solution became almost neutral, giving ethylenediamine-immobilized cellulose nanofibers (hereinafter also called EDA-CNF) as a solid content (filtration residue).

(3) Measurement of anion exchange capacity

Each anion exchange capacity (AEC) of the cationized silica monoliths of Examples 1 to 5, the cationized silica gel particle of Comparative example 1 and cationized cellulose nanofiber of Comparative example 2 was determined by a back-titration method using hydrochloric acid. The procedure will be described below.

Each particle was dried under reduced pressure for 24 hours or more at room temperature, and 0.5 g of the dried product was accurately weighed in a screw tube. Into the tube, 20 ml of a 0.1 mol/l hydrochloric acid with a known factor was added, and the whole was stirred on a roller for 2 hours. The mixture was filtered through a filter paper, and the filtrate was collected in another 10-ml screw tube. Titration was performed by using a 0.05 mol/l aqueous sodium hydroxide solution with a known factor using phenolphthalein as an indicator.

AEC was calculated in accordance with the following equation.

$$\text{AEC (mEq/dry·g)} = (0.1 \times f_{HCl} \times 20 - 0.05 \times f_{NaOH} \times V \times 20/10)/W$$

$f_{HCl}$: factor of used hydrochloric acid
$f_{NaOH}$: factor of used sodium hydroxide
V: titer (ml)
W: particle dry weight (dry·g)

Results are shown in Table 1

[Table 1]

| ET adsorbent | AEC (mEq/dry·g) |
|---|---|
| Example 1 | 0.47 |
| Example 2 | 0.27 |
| Example 3 | 2.70 |
| Example 4 | 1.27 |
| Example 5 | 0.63 |
| Comparative example 1 | 0.54 |
| Comparative example 2 | 0.83 |

(4) ET adsorption capacity evaluation

Each ET adsorption capacity of the cationized silica monoliths of Examples 1 to 5, the cationized silica gel particle of Comparative example 1 and cationized cellulose nanofiber of Comparative example 2 was determined.

The ET adsorption capacity was evaluated in a batch system.

Dry heat sterilizable instruments (conical beakers, transfer pipettes, pipettes, glass filters, spoons, Limulus tubes, and tube caps) were thoroughly washed and then was sterilized at 250°C for 4 hours. Syringes, membrane filters, and chips used were previously sterilized by $\gamma$-ray irradiation.

Each particle was washed 5 times on a glass filter with 25 ml of 0.2 M NaOH/95% EtOH. Next, washing was repeated with sterilized pure water until the filtrate became neutral.

In a 50-ml conical beaker, 0.16 g of the washed adsorbent was weighed. To the adsorbent, 10 ml of 4% by weight aqueous pullulan solution (pH = 6.0) prepared by dissolving pullulan (Hayashibara Co., Ltd.) in water for injection (Otsuka Distilled Water; Otsuka Pharmaceutical Factory, Inc.) was added, and the whole was shaken in a bioshaker at 20°C at 200 rpm for 3 hours.

Next, the aqueous solution containing particles was sucked with a syringe and was filtered through a 0.8-$\mu$m membrane filter. The filtrate was diluted with water for injection (Otsuka Distilled Water) 10 to 1,000 times. To a test tube containing Limulus reagent, Endospecy ES-24M (SEIKAGAKU CORPORATION), 0.2 ml of each diluted liquid was added, and the whole was thoroughly mixed with a vortex mixer. The test tube was installed in an EG Reader (SV-12;SEIKAGAKU CORPORATION), and the residual ET concentration was determined by a kinetic colorimetric method (Ee).

The concentration of ET contained in the aqueous pullulan solution before contact with the adsorbent (Es) was determined in a similar manner to the above: the aqueous pullulan solution was filtered through a 0.8-$\mu$m membrane filter;

the filtrate was diluted with water for injection (Otsuka Distilled Water) 10 to 1,000 times; and the concentration was determined using the Limulus reagent by the kinetic colorimetric method.

Results are shown in Table 2

[Table 2]

| ET adsorbent | LPS concentration before treatment (EU/g) | LPS concentration after treatment (EU/g) | ET removal rate (%) |
|---|---|---|---|
| Example 1 | 26700 | 26.32 | 99.90 |
| Example 2 | 26700 | 1.05 | 99.99 |
| Example 3 | 15250 | 25.75 | 99.83 |
| Example 4 | 26700 | 3.70 | 99.98 |
| Example 5 | 19197 | 54.02 | 99.72 |
| Comparative example 1 | 26700 | 11133.3 | 55.47 |
| Comparative example 2 | 23240 | 170 | 99.27 |

The cationized porous silica monolith particles in Examples 1 to 5 had an extremely high ET removal capacity of almost 100%. In contrast, in the same conditions, the cationized porous silica gel particles in Comparative Example 1 had a low ET removal rate. These results reveal that the monolithic structure contributes to the excellent ET removal capacity of the absorbent of the present invention.

(5) Study for preparing column

The N,N-dimethyldecylamine-immobilized porous silica monolith particles produced in Example 1 and the ethylenediamine-immobilized cellulose nanofibers produced in Comparative Example 2 were used to prepare columns. In other words, DDA-PSM and EDA-CNF were dried under reduced pressure at room temperature for 24 hours, and 0.2 to 0.5 g of each dried product was placed in a column having a volume of about 1 ml.

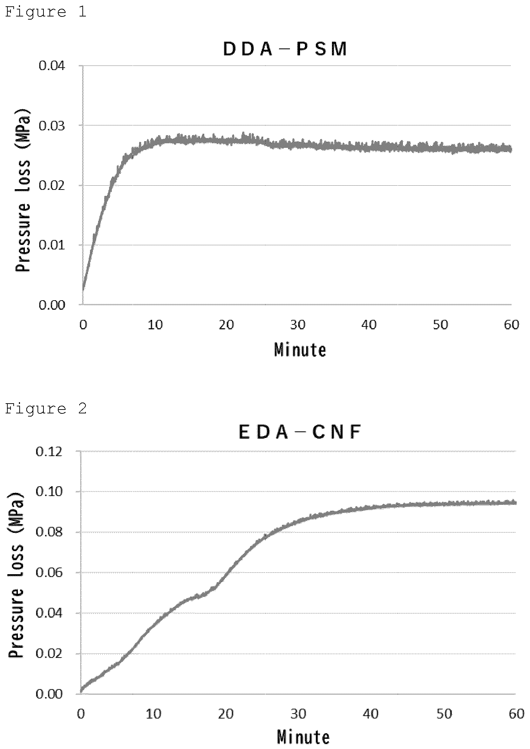

An 8% aqueous pullulan solution having a viscosity of 62 mPas was passed at a flow rate of 1.0 mL/min, and the pressure loss was determined. The results are shown in Fig. 1 (DDA-PSM) and Fig. 2 (EDA-CNF) .

The solution was passed at a flow rate of 1.0 mL/min through the column having a volume of about 1 ml. Through the column packed with the cationized silica monolith adsorbent in Example 1, the solution was able to be passed at a relatively stable pressure of up to nearly 0.03 MPa. Problems including container breakage due to pressurization did not arise. In contrast, through the column packed with the cationized cellulose nanofiber adsorbent in Comparative Example 2, the pressure loss reached 0.1 MPa.

The column packed with the ET adsorbent of the present invention has been revealed to be practically usable for ET removal from an aqueous composition.

(6) Study of radiation sterilization resistance

The N,N-dimethyldecylamine-immobilized porous silica monolith particles produced in Example 1 and the ethylenediamine-immobilized cellulose nanofibers produced in Comparative Example 2 were irradiated with γ-rays at 10 to 40 kGy for sterilization. The AEC and the ET removal performance were compared before and after the sterilization. The results are shown in Table 3.

[Table 3]

| | | AEC (mEq/dry·g) | LPS concentration before treatment (EU/g) | LPS concentration after treatment (EU/g) | ET removal rate (%) |
|---|---|---|---|---|---|
| Example 1 | Before γ-ray irradiation | 0.27 | 26700 | 1.05 | 99.99 |
| | After γ-ray irradiation | 0.26 | 26700 | 5.30 | 99.99 |
| Comparative example 2 | Before γ-ray irradiation | 0.15 | 23240 | 65.90 | 99.72 |
| | After γ-ray irradiation | 0.18 | 23240 | 521.54 | 97.75 |

The adsorbent comprising cellulose nanofibers as the base material in Comparative Example 2 had a slightly lower ET removal rate after the gamma sterilization. Due to an increase in AEC after the gamma sterilization, the ET removal rate per AEC largely decreased. In contrast, the AEC and the ET removal rate of the adsorbent comprising silica monolith as the base material in Example 1 did not decrease even after the gamma sterilization.

Industrial Applicability

The ET adsorbent of the present invention has an extremely high ET adsorption capacity and comprises an inorganic material as the base material. Hence, the ET adsorbent can be used for medical applications requiring high temperature sterilization. Therefore, the ET adsorbent is highly practical.

**Claims**

1. An endotoxin adsorbent comprising a silica monolith having a nitrogen atom-containing cationic group.

2. The endotoxin adsorbent according to claim 1, wherein the silica monolith has through-holes interconnected therein, and ends of the through-holes are open to an outside of the silica monolith.

3. The endotoxin adsorbent according to claim 1 or 2, wherein the nitrogen atom-containing cationic group is bonded to the silica monolith through or without a spacer or a crosslinking agent.

4. A method of producing an endotoxin adsorbent, the method comprising a step of introducing a nitrogen atom-containing cationic group to a silica monolith.

5. A method of producing a material from which endotoxin has been removed, the method comprising a step of bringing the endotoxin adsorbent according to any one of claims 1 to 3 into contact with a material containing endotoxin to be removed.

6. A method of producing a material from which endotoxin has been removed, the material containing a target substance, the method comprising a step of bringing the endotoxin adsorbent according to any one of claims 1 to 3 into contact with a material containing a target substance and containing endotoxin to be removed.

Figure 1

DDA-PSM

Figure 2

EDA-CNF

## INTERNATIONAL SEARCH REPORT

| International application No. |
| --- |
| **PCT/JP2023/012713** |

### A. CLASSIFICATION OF SUBJECT MATTER

***B01D 15/00***(2006.01)i; ***B01J 20/22***(2006.01)i; ***B01J 20/26***(2006.01)i; ***B01J 20/30***(2006.01)i; ***A23L 5/20***(2016.01)i; ***C02F 1/28***(2023.01)i
FI:    B01J20/22 C; A23L5/20; B01D15/00 K; B01D15/00 M; B01J20/26 G; B01J20/30; C02F1/28 A

According to International Patent Classification (IPC) or to both national classification and IPC

### B. FIELDS SEARCHED

Minimum documentation searched (classification system followed by classification symbols)

B01D15/00; B01J20/22; B01J20/26; B01J20/30; A23L5/20; C02F1/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2016-49527 A (KUMAMOTO UNIVERSITY) 11 April 2016 (2016-04-11)<br>    paragraphs [0012], [0013], [0014], [0016], [0065], [0085], examples | 1-6 |
| Y | US 2015/0251160 A1 (KOREA INSTITUTE OF SCIENCE AND TECHNOLOGY) 10 September 2015 (2015-09-10)<br>    paragraphs [0003], [0040] | 1-6 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 June 2023** | **20 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/012713**

| Patent document cited in search report | Publication date (day/month/year) | Patent family member(s) | Publication date (day/month/year) |
|---|---|---|---|
| JP 2016-49527 A | 11 April 2016 | (Family: none) | |
| US 2015/0251160 A1 | 10 September 2015 | KR 10-2015-0104454 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017018524 A1
- JP 4256434 A
- JP 2012096960 A